# EUROPÄISCHE PATENTANMELDUNG

(11) **EP 4 043 277 A1**
(43) Veröffentlichungstag der Anmeldung: **17.08.2022**
(21) Anmeldenummer: 22154495.0
(22) Anmeldetag: 01.02.2022
(51) Int. Cl.: B60N 2/60, B60N 2/70, B60N 2/90

(54) **FAHRZEUGSITZ, INSBESONDERE KRAFTFAHRZEUGSITZ**

(30) Priorität: 12.02.2021 DE 102021103384; 09.06.2021 DE 102021114867
(71) Anmelder: Adient US LLC, Plymouth, MI 48170 (US)
(72) Erfinder: HERING, Michelle, 44225 Dortmund (DE); SCHAETZMUELLER, Anja, 51789 Lindlar (DE); KOHLEN, Nikola, 50931 Koeln (DE); HENNIG, Lars, 42799 Leichlingen (DE); SCHULZE, Uwe, 51149 Koeln (DE)
(74) Vertreter: Liedhegener, Ralf

(57) **Zusammenfassung**

Fahrzeugsitz (1), insbesondere Kraftfahrzeugsitz, mit wenigstens einem Polsterteil (6), das Polsterteil (6) aufweisend einen Bezug (10) und einen den Bezug (10) abschnittsweise überdeckenden Zusatzbezug (12), wobei eine dreidimensionale Kontur eines Anpassungsbereichs (8) des Polsterteils (6) reversibel veränderbar ist, indem zwischen dem Zusatzbezug (12) und dem Bezug (10) ein austauschbares Zusatzpolster (20; 20a, 20b) anordenbar ist, wobei der Zusatzbezug (12) von dem Bezug (10) entnehmbar ist und der Zusatzbezug (12) ein Verbindungsmittel (14a) aufweist, wobei der Zusatzbezug (12) mittels des Verbindungsmittels (14a) mit dem Bezug (10) verbindbar ist.

## Beschreibung

Die Erfindung betrifft einen Fahrzeugsitz, insbesondere Kraftfahrzeugsitz, mit wenigstens einem Polsterteil, das Polsterteil aufweisend einen Bezug und einen den Bezug abschnittsweise überdeckenden Zusatzbezug, wobei eine dreidimensionale Kontur eines Anpassungsbereichs des Polsterteils reversibel veränderbar ist, indem zwischen dem Zusatzbezug und dem Bezug ein austauschbares Zusatzpolster anordenbar ist.

### Stand der Technik

Es ist aus dem Stand der Technik allgemein bekannt, Polsterteile von Fahrzeugsitzen mit auswechselbaren Sitzbezügen zu versehen, um den Komfort und die Ästhetik von Fahrzeugsitzen zu verbessern. Solche Sitzüberzüge werden dabei üblicherweise mittels einer auf Kraft- und Formschluss-Verbindungen basierenden Befestigungsanordnung an dem Sitzpolster befestigt.

Ein auf einem Polsterteil angeordneter Sitzbezug besteht meist aus gewebten oder gestrickten Stoffen oder aus Leder, und stellt hohe Anforderungen an die Gebrauchstauglichkeit. Der Sitzbezug bedeckt häufig nur die Vorderseite des Fahrzeugsitzes, also die Gebrauchsseite, während in den Seitenbereichen oder auf der Rückseite Stoffe mit weniger hohen Anforderungen eingesetzt werden können. Allerdings kann der für die Vorderseite vorgesehene Sitzbezug auch für die Wangen und die Rückseite verwendet werden.

Aus der FR 2 781 733 B1 ist ein Fahrzeugsitz bekannt, der Fahrzeugsitz aufweisend ein Polster mit einem Polsterteil und einem Sitzbezug. Ein Klettband und ein Flauschband an dem Sitzbezug bzw. dem Polsterteil dient dazu, den Sitzbezug an dem Polsterteil oberflächenseitig aufzubringen. Durch eine solche Klettverbindung kann der Sitzbezug einfach von dem Polsterteil separiert und erneut wieder an diesem befestigt werden.

Die JP S59 - 101 759 U offenbart eine Rückenlehne eines Fahrzeugsitzes, die Rückenlehne aufweisend ein Polsterteil mit einem Bezug, an dem ein den Bezug abschnittsweise überdeckender Zusatzbezug dauerhaft befestigt ist, wobei der Zusatzbezug partiell von dem Bezug lösbar, aber nicht von dem Bezug entnehmbar ist. Der Zusatzbezug ist an seiner Oberkante fest mit dem Bezug verbunden. Im Bereich seiner Unterkante weist der Zusatzbezug ein Verbindungsmittel auf, mit dem auch die Unterkante des Zusatzbezugs mit dem Bezug verbindbar ist. Eine dreidimensionale Kontur eines Anpassungsbereichs des Polsterteils ist reversibel veränderbar, indem zwischen dem Zusatzbezug und dem Bezug ein austauschbares Zusatzpolster anordenbar ist. Dazu wird vorübergehend die Unterkante des Zusatzbezugs von dem Bezug gelöst und das Zusatzpolster zwischen dem Bezug und dem Zusatzbezug eingelegt. Die Verbindung der Oberkante des Zusatzbezugs zum Bezug bleibt dabei immer bestehen.

### Aufgabe

Der Erfindung liegt die Aufgabe zu Grunde, einen Fahrzeugsitz eingangs genannter Art zu verbessern, insbesondere einen Fahrzeugsitz mit einem erhöhten Komfort sowie einem verbesserten Sitzerlebnis für einen Insassen bereitzustellen. Zudem soll der Fahrzeugsitz leicht durch einen Benutzer gereinigt werden können.

### Lösung

Diese Aufgabe wird erfindungsgemäß gelöst durch einen Fahrzeugsitz, insbesondere Kraftfahrzeugsitz, mit wenigstens einem Polsterteil, das Polsterteil aufweisend einen Bezug und einen den Bezug abschnittsweise überdeckenden Zusatzbezug, wobei eine dreidimensionale Kontur eines Anpassungsbereichs des Polsterteils reversibel veränderbar ist, indem zwischen dem Zusatzbezug und dem Bezug ein austauschbares Zusatzpolster anordenbar ist, wobei der Zusatzbezug von dem Bezug entnehmbar ist und der Zusatzbezug ein Verbindungsmittel aufweist, wobei der Zusatzbezug mittels des Verbindungsmittels mit dem Bezug verbindbar ist.

Dadurch, dass der Zusatzbezug von dem Bezug entnehmbar ist und der Zusatzbezug ein Verbindungsmittel aufweist, wobei der Zusatzbezug mittels des Verbindungsmittels mit dem Bezug verbindbar ist, lässt sich ein für einen Insassen wahrnehmbares Sitzerlebnis mit einfachen Mitteln und wenigen Handgriffen individuell anpassen. Zudem lässt sich der Zusatzbezug leicht reinigen, insbesondere in einer haushaltsüblichen Waschmaschine.

Das Merkmal, dass der Zusatzbezug entnehmbar ist, bedeutet, dass der Zusatzbezug vollständig von dem Bezug lösbar ist und anschließend wieder an dem Bezug befestigbar ist. Vorzugsweise ist der Zusatzbezug reversibel und mehrfach vollständig von dem Bezug lösbar und wieder an dem Bezug befestigbar. Dadurch, dass der Zusatzbezug vollständig von dem Bezug entnehmbar ist, kann der Zusatzbezug beispielsweise gereinigt oder gewaschen und anschließend wieder mit dem Bezug verbunden werden. Zudem kann bei einer Beschädigung der sichtbaren Polsteroberfläche einfach und kostengünstig der Zusatzbezug ausgetauscht werden.

Vorteilhafte Ausgestaltungen, welche einzeln oder in Kombination miteinander eingesetzt werden können, sind Gegenstand der Unteransprüche.

Der Zusatzbezug kann mittels des Verbindungsmittels mit einem Verbindungsmittel des Bezugs verbindbar sein. Das Verbindungsmittel des Zusatzbezugs und das Verbindungsmittel des Bezugs können gemeinsam einen Reißverschluss bilden. Ein Reißverschluss ist ein dem Endverbraucher allgemein bekanntes Verbindungsmittel und deshalb besonders geeignet, um den Zusatzbezug mit dem Bezug zu verbinden. Der Reißverschluss ist vorzugsweise um den Zusatzbezug umlaufend ausgebildet. Da ein Reißverschluss nicht endlos umlaufend sein kann, ist unter dem Merkmal umlaufend eine Anordnung zu verstehen, bei dem ein Anfang und ein Ende des Reißverschlusses einen herstellbaren minimalen Abstand zueinander haben.

Vorzugsweise ist ein umlaufender Rand des Zusatzbezugs ausschließlich mittels des Reißverschlusses mit dem Bezug verbunden.

Der Fahrzeugsitz kann ein Sitzteil aufweisen. Der Fahrzeugsitz kann eine Rückenlehne aufweisen. Das Polsterteil kann Bestandteil des Sitzteils oder der Rückenlehne sein.

Der Anpassungsbereich des Polsterteils kann in einem seitlichen Bereich eines Sitzteils angeordnet sein. Der Anpassungsbereich des Polsterteils kann im Bereich eines Seitenflügels eines Sitzteils angeordnet sein. Der Anpassungsbereich des Polsterteils kann in einem hinteren Bereich eines Sitzteils angeordnet sein. Der Anpassungsbereich des Polsterteils kann in einem vorderen Bereich eines Sitzteils angeordnet sein. Der Anpassungsbereich des Polsterteils kann in einem mittleren Bereich eines Sitzteils angeordnet sein.

Der Anpassungsbereich des Polsterteils kann in einem seitlichen Bereich einer Rückenlehne angeordnet sein. Der Anpassungsbereich des Polsterteils kann im Bereich eines Seitenflügels einer Rückenlehne angeordnet sein. Der Anpassungsbereich des Polsterteils kann in einem unteren Bereich einer Rückenlehne angeordnet sein. Der Anpassungsbereich des Polsterteils kann in einem oberen Bereich einer Rückenlehne angeordnet sein. Der Anpassungsbereich des Polsterteils kann in einem mittleren Bereich einer Rückenlehne angeordnet sein. Der Anpassungsbereich des Polsterteils einer Rückenlehne kann im Bereich von Schultern eines Insassen angeordnet sein. Der Anpassungsbereich des Polsterteils kann in einem Lordosenbereich der Rückenlehne angeordnet sein.

Mittels des Zusatzpolsters ist eine dreidimensionale Kontur des Anpassungsbereiches des Polsterteils reversibel an die Bedürfnisse eines Insassen anpassbar. Das Zusatzpolster ist bevorzugt wenigstens in den Anpassungsbereichen, aus einem elastischen Material gefertigt. Das Zusatzpolster kann abschnittsweise, insbesondere in den Anpassungsbereichen, ein elastisches Material aufweisen. Hierdurch kann sich der Zusatzbezug, nach einem Entfernen oder Austauschen des Zusatzpolsters, wieder an eine Kontur des Fahrzeugsitzes ohne oder mit einem anderen Zusatzpolster anpassen. Beispielsweise kann der Fahrzeugsitz mittels eines Zusatzpolsters, insbesondere mittels mehrerer Zusatzpolster, sportlicher konturiert werden.

Mittels des Zusatzpolsters kann eine haptische Eigenschaft für einen Insassen in dem Anpassungsbereich des Polsterteils des Fahrzeugsitzes beeinflussbar sein. Das Zusatzpolster kann eine gleichmäßige Dicke aufweisen. Das Zusatzpolster kann eine wenigstens entlang einer Ausdehnungsrichtung zunehmende Dicke aufweisen. Das Zusatzpolster kann eine zu der Seite zunehmende Dicke aufweisen. Das Zusatzpolster kann eine entlang einer Querrichtung zunehmende Dicke aufweisen. Das Zusatzpolster kann eine minimale Dicke im Bereich von 3 bis 20 mm aufweisen. Das Zusatzpolster kann eine maximale Dicke im Bereich von 8 bis 30 mm aufweisen.

Das Zusatzpolster kann abschnittsweise ein Befestigungsmittel aufweisen. Das Befestigungsmittel kann eine erste Hälfte eines Klettverschluss-Verbindungsmittels sein. Das Befestigungsmittel kann ein mehrere Haken aufweisendes Klettverschluss-Verbindungsmittel sein. Alternativ kann das Befestigungsmittel ein mehrere Schlaufen aufweisendes Klettverschluss-Verbindungsmittel sein.

Der Bezug kann abschnittsweise ein mit dem Befestigungsmittel des Zusatzpolsters kooperierendes Befestigungsgegenmittel aufweisen. Der Zusatzbezug kann abschnittsweise ein mit dem Befestigungsmittel des Zusatzpolsters kooperierendes Befestigungsgegenmittel aufweisen. Das Befestigungsgegenmittel kann eine zweite Hälfte eines Klettverschluss-Verbindungsmittels sein. Das Befestigungsgegenmittel kann ein mehrere Schlaufen aufweisendes Klettverschluss-Verbindungsmittel sein. Alternativ kann das Befestigungsgegenmittel ein mehrere Haken aufweisendes Klettverschluss-Verbindungsmittel sein.

Das Zusatzpolster kann aus einem Schaumstoff, einem Gel, einem Gelschaum, einem Abstandsgewebe, einem Abstandsgewirke oder einem Spacer gefertigt sein. Das Zusatzpolster kann ein Schaumstoff-Formteil sein. Das Zusatzpolster kann einen Schutzbezug aufweisen. Das Zusatzpolster kann einen textilen Schutzbezug aufweisen. Das Zusatzpolster kann durch den Schutzbezug beständiger gegen schädliche UV-Strahlung sein.

Der Fahrzeugsitz kann eine Mehrzahl an Zusatzpolstern aufweisen. Der Fahrzeugsitz kann eine Mehrzahl an Anpassungsbereichen aufweisen. In den mehreren Anpassungsbereichen des Fahrzeugsitzes kann jeweils genau ein Zusatzpolster angeordnet sein. In den mehreren Anpassungsbereichen des Fahrzeugsitzes können unterschiedliche Zusatzpolster angeordnet sein. Die mehreren Zusatzpolster können symmetrisch zu einer senkrecht zu Querachse orientierten Mittelebene angeordnet sein. Die Zusatzpolster können paarweise spiegelsymmetrisch ausgestaltet sein. Die Zusatzpolster können unterschiedlich ausgestaltet sein. Insbesondere kann ein Zusatzpolster eines tunnelseitigen Seitenflügels des Sitzteils oder der Rückenlehne höher ausgestaltet sein, als ein Zusatzpolster eines türseitigen Seitenflügels des Sitzteils oder der Rückenlehne.

Zusammenfassend und mit anderen Worten ausgedrückt, kann durch die neu gewonnene Individualisierbarkeit des Fahrzeugsitzes nun ferner ein subjektiver Sitzkomfort beeinflussbar sein. So kann man nun aus einem sogenannten Basissitz durch entsprechende Anpassungen mittels eines oder mehrerer Zusatzpolster eine sportlichere Variante mit entsprechend mehr Seitenhalt kreieren, wobei das persönliche Empfinden eines Insassen berücksichtigbar und individuell auslegbar ist.

Dadurch, dass der Zusatzbezug von einem Fahrzeugnutzer selbst entnommen und wiedereingesetzt werden kann, ist die Möglichkeit geschaffen, in Teilbereichen des Fahrzeugsitzes zusätzliche Zusatzpolster zu platzieren. Diese Zusatzpolster können aus Schaumstoff, Gel, einem Abstandsgewebe oder Abstandsgewirke oder andere Materialien gefertigt und mit einer Tasche aus Textil geschützt direkt zwischen dem (technischen) Bezug und dem entnehmbaren Zusatzbezug platziert werden.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: einen erfindungsgemäßen Fahrzeugsitz mit Polsterteilen und Zusatzpolstern, ohne einen Zusatzbezug,
- Fig. 2:: eine Draufsicht auf ein Sitzteil des Fahrzeugsitzes von Fig. 1,
- Fig. 3:: ausschnittsweise einen Seitenflügel des Sitzteils von Fig. 2,
- Fig. 4:: ein Zusatzpolster,
- Fig. 5:: ausschnittsweise den Seitenflügel von Fig. 3 mit dem eingesetzten Zusatzpolster von Fig. 4,
- Fig. 6:: eine Ansicht von vorne auf den Seitenflügel mit dem Zusatzpolster von Fig. 5,
- Fig. 7:: eine Ansicht von vorne auf den Seitenflügel mit dem Zusatzpolster und einem mit dem Bezug teilweise befestigten Zusatzbezug, und
- Fig. 8:: eine Ansicht von vorne auf das Sitzteil von Fig. 2 nach der Montage der Zusatzpolster und vollständig befestigtem Zusatzbezug.

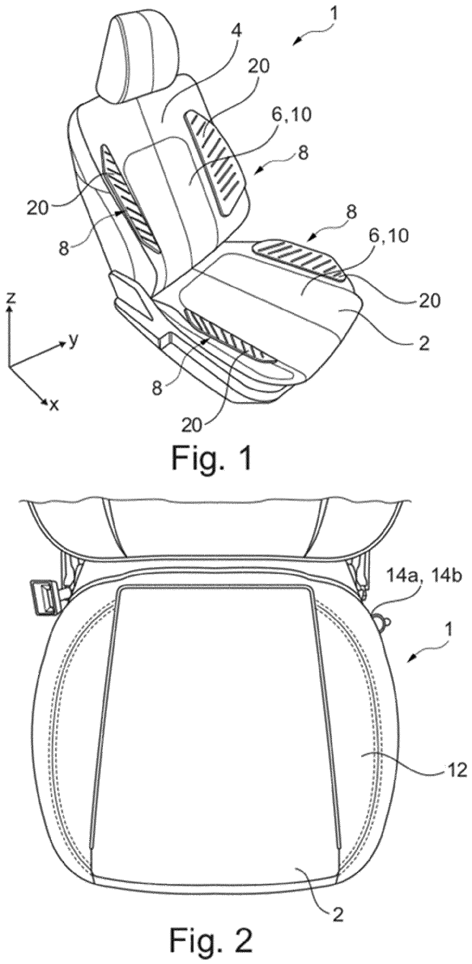

Ein in Fig. 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem in einem Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zu einer Personenbeförderung geeigneten Gebrauchsposition mit aufrechtstehender Rückenlehne 4 und wie üblich in Fahrtrichtung ausgerichtet ist. Der Fahrzeugsitz 1 kann jedoch auch in abweichender Ausrichtung, beispielsweise quer zu der Fahrtrichtung verbaut werden.

Der in Fig. 1 gezeigte Fahrzeugsitz 1 für ein Kraftfahrzeug weist ein Sitzteil 2 und eine relativ zu dem Sitzteil 2 in ihrer Neigung einstellbare Rückenlehne 4 auf. Eine Neigung der Rückenlehne 4 kann beispielsweise mittels eines Rastbeschlages oder eines Getriebebeschlages einstellbar sein.

Das Sitzteil 2 und die Rückenlehne 4 des Fahrzeugsitzes 1 weisen jeweils ein Polsterteil 6 auf. Das Polsterteil 6 des Sitzteils 2 sowie der Rückenlehne 4 ist jeweils mit wenigstens einem das jeweilige Polsterteil 6 überspannenden Bezug 10 versehen. Ferner ist ein den Bezug 10 abschnittsweise überdeckender Zusatzbezug 12 vorgesehen. Der Zusatzbezug 12 erstreckt sich vorliegend über die gesamte Breite des Sitzteils 2 bzw. der Rückenlehne 4.

Der Fahrzeugsitz 1 weist vorliegend zwei Polsterteile 6 mit mehreren Anpassungsbereichen 8 auf. In den Anpassungsbereichen 8 ist zwischen dem Zusatzbezug 12 und dem Bezug 10 wenigstens ein austauschbares Zusatzpolster 20 anordenbar. Dadurch ist die dreidimensionale Kontur der Anpassungsbereiche 8 veränderbar.

Der Fahrzeugsitz 1 weist vorliegend mehrere Zusatzpolster 20 auf. Die mehreren Zusatzpolster 20 sind vorliegend paarweise spiegelsymmetrisch zu einer senkrecht zur Querachse y orientierten Mittelebene angeordnet.

Zwei der Anpassungsbereiche 8 sind in einem seitlichen Bereich des Polsterteils 6 des Sitzteils 2, vorliegend in einem Bereich eines Seitenflügels des Sitzteils 2, angeordnet. Zwei weitere Anpassungsbereiche 8 sind in einem seitlichen Bereich des Polsterteils 6 der Rückenlehne 4, vorliegend in einem Bereich eines Seitenflügels der Rückenlehne 4, angeordnet.

Fig. 2 zeigt eine Ansicht von oben auf das Sitzteil 2 des Fahrzeugsitzes 1. Der Zusatzbezug 12 weist ein erstes Verbindungsmittel 14a auf. Zur Befestigung des Zusatzbezugs 12 an dem Bezug 10 weist der Bezug 10 ein mit dem ersten Verbindungmittel 14a kooperierendes zweites Verbindungsmittel 14b auf. Die beiden Verbindungsmittel 14a, 14b bilden vorliegend gemeinsam einen Reißverschluss.

Vorliegend verläuft der Reißverschluss umlaufend, insbesondere vollständig umlaufend, um das Sitzteil 2 herum. Der Zusatzbezug 12 ist mittels eines ersten Verbindungsmittels 14a in Wirkverbindung mit dem zweiten Verbindungsmittel 14b, insbesondere vollumfänglich, an dem Bezug 10 befestigbar.

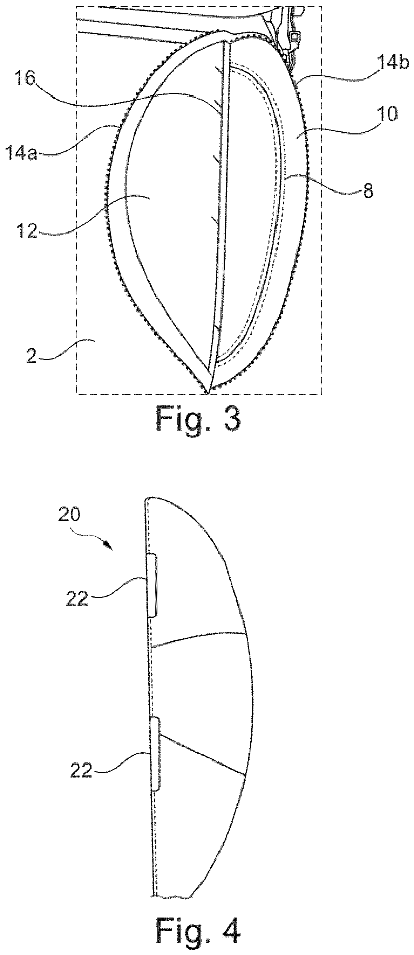

Fig. 3 zeigt den Zusatzbezug 12 in einem Zustand mit jeweils voneinander getrennten Verbindungsmitteln 14a, 14b, wobei der Zusatzbezug 12 abschnittsweise umgeklappt ist.

Fig. 4 zeigt das Zusatzpolster 20 mit einem Schutzbezug. Der Schutzbezug umgibt vorzugsweise ein Schaumteil. Das Zusatzpolster 20 weist abschnittsweise ein Befestigungsmittel 22 auf. Das Befestigungsmittel 22 ist vorliegend als eine erste Hälfte eines Klettverschluss-Verbindungsmittels ausgestaltet.

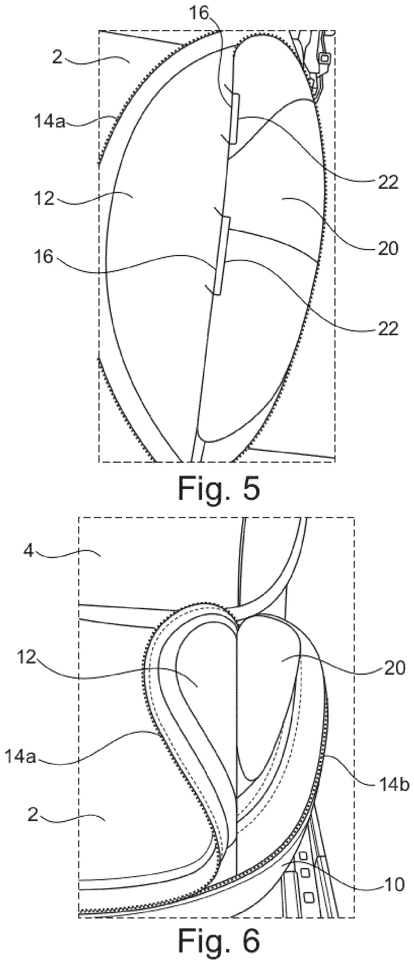

Die Figuren 5 und 6 zeigen den Seitenflügel des Sitzteils 2 mit dem eingesetzten Zusatzpolster 20. Der Zusatzbezug 12 weist abschnittsweise ein mit dem Befestigungsmittel 22 des Zusatzpolsters 20 kooperierendes Befestigungsgegenmittel 16 auf. Das Befestigungsgegenmittel 16 ist vorliegend als eine zweite Hälfte des Klettverschluss-Verbindungsmittels ausgestaltet.

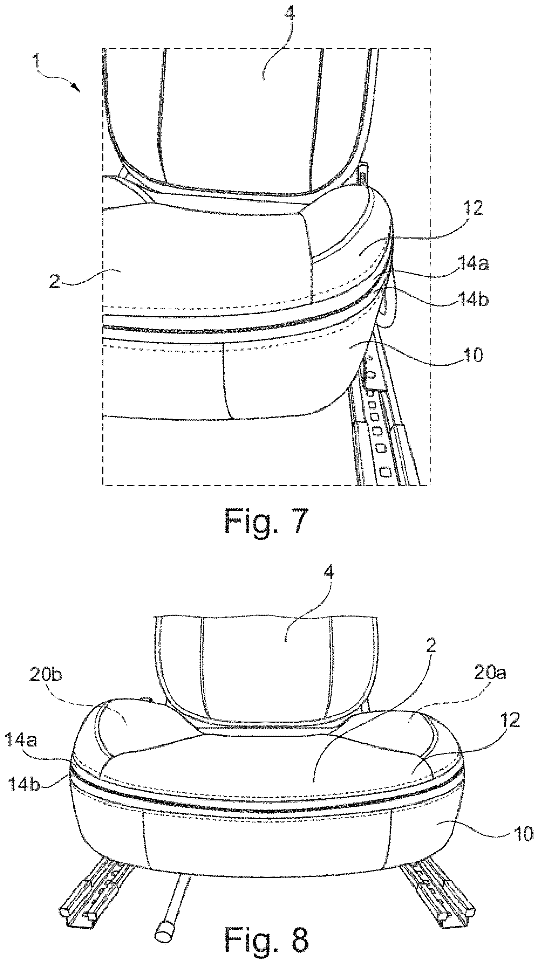

Die Figuren 7 und 8 zeigen unterschiedliche Ansichten von vorne auf das Sitzteil 2 bzw. den Seitenflügel mit dem Zusatzpolster 20 und dem Zusatzbezug 12. Der dargestellte Zustand liegt beispielsweise nach der Montage der Zusatzpolster 20 vor, wenn die Verbindungsmittel 14a, 14b des Zusatzbezugs 12 und des Bezugs 10 wieder miteinander verbunden sind.

Die im Fahrzeugsitz 1 eingebrachten Zusatzpolster 20a, 20b sind vorliegend beispielhaft unterschiedlich ausgestaltet. Insbesondere weist das Zusatzpolster 20b des in Fig. 8 tunnelseitigen Seitenflügels des Sitzteils 2 eine höhere Dicke auf, als das gegenüberliegende Zusatzpolster 20a des türseitigen Seitenflügels. Eine Anpassung des türseitigen Seitenflügels mit einem vergleichsweise dünneren Zusatzpolster 20a oder gar ganz ohne Zusatzpolster 20a, erleichtert ein Einsteigen in den Fahrzeugsitz 1 bzw. ein Aussteigen aus dem Fahrzeugsitz 1 für den Insassen. Wohingegen durch eine Anpassung des tunnelseitigen Seitenflügels mit einem vergleichsweise dickeren Zusatzpolster 20b, sich der Seitenhalt in Richtung der Tunnelseite des Sitzteils 2 erhöhen lässt.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein, insofern dies vom Wortlaut der unabhängigen Ansprüche abgedeckt ist.

### Bezugszeichenliste

- 1: Fahrzeugsitz
- 2: Sitzteil
- 4: Rückenlehne
- 6: Polsterteil
- 8: Anpassungsbereich
- 10: Bezug
- 12: Zusatzbezug
- 14a: Verbindungsmittel
- 14b: Verbindungsmittel
- 16: Befestigungsgegenmittel
- 20: Zusatzpolster
- 20a: Zusatzpolster
- 20b: Zusatzpolster
- 22: Befestigungsmittel

## Patentansprüche

1. Fahrzeugsitz (1), insbesondere Kraftfahrzeugsitz, mit wenigstens einem Polsterteil (6), das Polsterteil (6) aufweisend einen Bezug (10) und einen den Bezug (10) abschnittsweise überdeckenden Zusatzbezug (12), wobei eine dreidimensionale Kontur eines Anpassungsbereichs (8) des Polsterteils (6) reversibel veränderbar ist, indem zwischen dem Zusatzbezug (12) und dem Bezug (10) ein austauschbares Zusatzpolster (20; 20a, 20b) anordenbar ist, **dadurch gekennzeichnet, dass**
der Zusatzbezug (12) von dem Bezug (10) entnehmbar ist und der Zusatzbezug (12) ein Verbindungsmittel (14a) aufweist, wobei der Zusatzbezug (12) mittels des Verbindungsmittels (14a) mit dem Bezug (10) verbindbar ist.

2. Fahrzeugsitz (1) nach Anspruch 1, wobei der Zusatzbezug (12) mittels des Verbindungsmittels (14a) mit einem Verbindungsmittel (14b) des Bezugs (10), verbindbar ist.

3. Fahrzeugsitz (1) nach Anspruch 1 oder 2, wobei das Verbindungsmittel (14a) des Zusatzbezugs (12) und das Verbindungsmittel (14b) des Bezugs (10) gemeinsam einen Reißverschluss bilden.

4. Fahrzeugsitz (1) nach Anspruch 3, wobei der Reißverschluss um den Zusatzbezug (12) umlaufend ausgebildet ist.

5. Fahrzeugsitz (1) nach einem der Ansprüche 1 bis 4, wobei das Zusatzpolster (20; 20a, 20b) eine gleichmäßige Dicke aufweist.

6. Fahrzeugsitz (1) nach einem der Ansprüche 1 bis 4, wobei das Zusatzpolster (20; 20a, 20b) eine wenigstens entlang einer Ausdehnungsrichtung zunehmende Dicke aufweist.

7. Fahrzeugsitz (1) nach einem der Ansprüche 1 bis 6, wobei das Zusatzpolster (20; 20a, 20b) eine minimale Dicke im Bereich von 3 bis 20 mm aufweist.

8. Fahrzeugsitz (1) nach einem der Ansprüche 1 bis 7, wobei das Zusatzpolster (20; 20a, 20b) eine maximale Dicke im Bereich von 8 bis 30 mm aufweist.

9. Fahrzeugsitz (1) nach einem der Ansprüche 1 bis 8, wobei das Zusatzpolster (20; 20a, 20b) ein Befestigungsmittel (22) aufweist.

10. Fahrzeugsitz (1) nach Anspruch 9, wobei der Bezug (10) oder der Zusatzbezug (12) ein mit dem Befestigungsmittel (22) des Zusatzpolsters (20; 20a, 20b) kooperierendes Befestigungsgegenmittel (16) aufweist.

11. Fahrzeugsitz (1) nach Anspruch 9 oder 10, wobei das Befestigungsmittel (22) des Zusatzpolsters (20; 20a, 20b) eine erste Hälfte eines Klettverschluss-Verbindungsmittels ist.

12. Fahrzeugsitz (1) nach Anspruch 11, wobei das kooperierende Befestigungsgegenmittel (16) des Bezugs (10) eine zweite Hälfte des Klettverschluss-Verbindungsmittels ist.

13. Fahrzeugsitz (1) nach einem der Ansprüche 1 bis 12, wobei das Zusatzpolster (20; 20a, 20b) aus einem Schaumstoff, einem Gel, einem Gelschaum, einem Abstandsgewebe, einem Abstandsgewirke oder einem Spacer gefertigt ist.

14. Fahrzeugsitz (1) nach einem der Ansprüche 1 bis 13, wobei in mehreren Anpassungsbereichen (8) des Fahrzeugsitzes (1) jeweils wenigstens ein Zusatzpolster (20; 20a, 20b) angeordnet ist.

15. Fahrzeugsitz (1) nach Anspruch 14, wobei in den mehreren Anpassungsbereichen (8) des Fahrzeugsitzes (1) jeweils unterschiedliche Zusatzpolster (20; 20a, 20b) angeordnet sind.
